# EUROPEAN PATENT APPLICATION

(11) **EP 0 860 934 A1**
(43) Date of publication of application: **26.08.1998**
(21) Application number: 98103106.5
(22) Date of filing: 23.02.1998
(51) Int. Cl.: H02K 49/04

(54) **Eddy current brake**

(30) Priority: 25.02.1997 JP 56849/97
(71) Applicant: Isuzu Motors Limited, Tokyo (JP)
(72) Inventor: Yamada, Chuji, Fujisawa-shi, Kanagawa (JP); Kobayashi, Shin, Fujisawa-shi, Kanagawa (JP); Ogawa, Makoto, Fujisawa-shi, Kanagawa (JP); Kuwahara, Tohru, c/o Isuzu Motors Limited, Kawasaki-ku, Kawasaki-shi, Kanagawa (JP); Okumura, Eiji, Fujisawa-shi, Kanagawa (JP)
(74) Representative: Niedmers, Ole, Dipl.-Phys.

(57) **Abstract**

Magnets 20 are arranged, through ferromagnetic plates 21, opposedly of the inner peripheral surface of a brake drum 13 made of steel and secured to a rotational shaft 4. When the rotating brake drum 13 crosses magnetic fluxes from the magnets 20, the braking force caused by eddy current is generated in the brake drum 13. An annular body 41 formed of a good conductor such as copper is fastened to at least one end portion, not opposed to the ferromagnetic plate 21, in the inner peripheral surface of the brake drum 13.

Annular body formed of a good conductor is connected to inner peripheral portion of the opposite ends of a brake drum to thereby increase a braking force and to prevent the annular body formed of a good conductor from being thermally deteriorated.

## Description

### BACK GROUND OF THE INVENTION

The present invention relates to an eddy current reduction apparatus for generating a braking force on the basis of an eddy current in a rotational body such as a brake drum, using permanent magnets or electromagnets, and particularly to an eddy current reduction apparatus adapted to enhance braking efficiency.

The eddy current reduction apparats generates a braking force by the mutual action of magnetic fields in which the magnets exercising on the brake drum and eddy currents generated by the relative rotation of the magnets and the brake drum. Therefore, if a material having a large permeability such as iron (steel) and a material having a large electric conductivity are compounded with respect to the brake drum, eddy currents to be generated increase, and the braking force also becomes large.

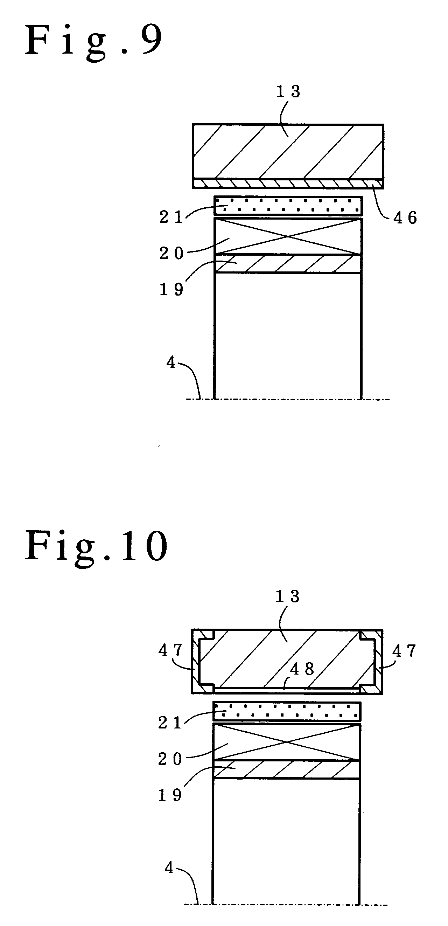

In the past, for the purpose of enhancing the braking efficiency, a copper plate, a copper coating, electric conductive rods (slots) or a copper ring is mounted on the outer peripheral surface of each ferromagnetic plate (pole piece), each permanent magnet, or on the inner peripheral surface of the brake drum. For example, as shown in FIG. 9, in the eddy current reduction apparatus in which a tubular body 46 made of copper is connected to the inner peripheral surface of a brake drum 13 made of copper, the braking force is increased to some extent, but when the tubular body 46 having a large electric conductivity such as copper is present in the vicinity of the central portion of the inner peripheral surface of the brake drum 13 which is poor in radiating properties, an eddy current is concentrated on the tubular body 46 to increase a temperature so that a material thermal deterioration occurs in the tubular body, posing a problem in reliability. That is, copper constituting the tublar body is higher in thermal expansion coefficient than that of steel constituting the brake drum so that the central portion of the inner peripheral surface of the brake drum becomes high in temperature and a peeling (separation) or a crack occurs in the connecting portion between the copper tublar body and the brake drum.

In view of the foregoing, an attempt has been made to make an arrangement as shown in FIG. 10 (see Japanese Utility Model Application Laid-Open No. Hei 4-111284 Publication for more details), wherein copper rings 43 of channel-shape in section are fitted in both end surfaces of the brake drum 13, and a plurality of axial electric conductive rods (slots) 48 are connected between the pair of copper rings 43 to escape heat of the electric conductive rods 48 to both ends of the brake drum 13. It has been found that the temperature of the electric conductive rods 48 are less lowered, however the effect of the electric conductive rods 48 cannot be much expected even in terms of braking performance. Particularly, in the case where copper rings 47 of channel-shape in section are fitted in the opposite end surfaces of the brake drum 13, a clearance of the fitting portion of the copper rings 47 is presently enlarged so that the electric resistance increases and the braking performance is not enhanced. Further, a high frequency noise is generated during braking. As disclosed in Japanese Utility Model Application Laid-Open No. Hei 3-874186 Publication, even if the direction of the electric conductive rod is inclined relative to the rotational axis of the brake drum, the high frequency noise can be incompletely removed.

In view of the aforementioned problem, The object of the present invention provides an eddy current reduction apparatus in which annular bodies formed of a good conductor are secured to inner peripheral portion of the opposite ends of a brake drum in order to increase the barking force and prevent the thermal deterioration of the annular bodies formed of a good conductor.

For solving the aforementioned problem, according to the present invention, there is provided an eddy current reduction apparatus for generating a braking force in a rotational body of an eddy current using magnets, the apparatus comprising a steel brake drum secured to a rotational shaft, a plurality of magnets opposed to the inner peripheral surface of said brake drum through ferromagnetic plates, and an annular body formed of a good conductor such as copper secured to at least of one end of said brake drum not opposed to the ferromagnetic plate in the inner peripheral surface of said brake drum.

### SUMARY OF THE INVENTION

In the brake drum according to the present invention, there is provided a composite construction in which materials having a high electric conductivity such as copper are arranged on the opposite ends or in the vicinity thereof of a brake drum body formed of an iron (steel) material having a high permeability, thereby to suppress a thermal deterioration of the material having a high electric conductivity due to increased eddy current to enhance a braking torque and to reduce noises.

### DESCRIPTION OF THE DRAWINGS

These and other objects and features of the invention will become more apparent upon a perusal of the following description taken in conjunction with the accompanying drawings wherein:
FIG. 1 is a sectional view in front of an eddy current type reduction apparatus to which the present invention is applied.
FIG. 2 is a sectional view in side of the eddy current type reduction apparatus.
FIG. 3 is a sectional view in front showing main parts of an eddy current type reduction apparatus according to the present invention.
FIG. 4 is a sectional view in front showing main parts of an eddy current type reduction apparatus according to a further embodiment of the present invention.
FIG. 5 is a sectional view in front showing main parts of an eddy current type reduction apparatus according to another embodiment of the present invention.
FIG. 6 is a sectional view in front showing main parts of an eddy current type reduction apparatus according to still another embodiment of the present invention.
FIG. 7 is a sectional view in front showing main parts of an eddy current type reduction apparatus according to another embodiment of the present invention.
FIG. 8 is a characteristic curve for comparison of the eddy current type reduction apparatus according to the present invention with prior art.
FIG. 9 is a sectional view in front showing main parts of a conventional eddy current type reduction apparatus.
FIG. 10 is a sectional view in front showing main parts of a further conventional eddy current type reduction apparatus.

### DESCRIPTION OF THE PREFERRED EMBODIMENTS

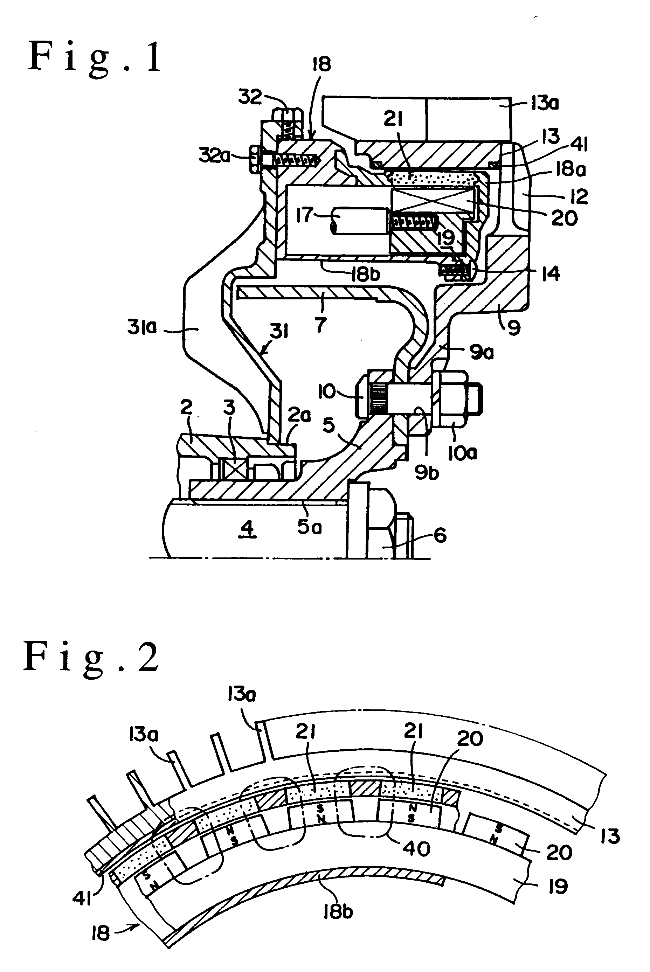

FIG. 1 is a sectional view in front of a magnet type eddy current reduction apparatus to which the present invention is applied, and Fig. 2 is a sectional view in side. In the magnet type eddy current reduction apparatus according to the present invention, a brake drum 13 is connected to a rotational shaft 4. To accomplish above, a mounting flange 5 having a spline hole 5a is fitted in the output rotational shaft 4 which is supported on the end wall of a gear box 2 of a speed change gear by means of a bearing 3 and projected from an end wall, and the mounting flange 5 is fastened by a but 6 so as not to be slipped out. An end wall of a brake drum 7 of a parking brake and a flange portion 9a integral with a boss portion 9 of the brake drum 13 of the eddy current reduction apparatus are superposed and fastened by a plurality of bolts 10 and nuts 10a.

The brake drum 13 is formed of a material having a high permeability such as iron (steel), and a proximal end thereof is connected to a number of spokes 12 extending in a radial direction from the boss portion 9. A number of cooling fins 13a are integrally provided at the same peripheral intervals on the outer peripheral wall of the brake drum 13.

A guide tube 18 having an inner space in the shape of box in section is disposed coaxially within the brake drum 13. The immovable guide tube 18 formed of a non-magnetic material is secured by means of bolts 32, 32a to a frame plate 31 fitted over and secured to a projecting wall 2a of a gear box 2. The guide tube 18 may be constituted by connecting annular end wall plates to the opposite ends of an outer peripheral wall portion 18a and an inner peripheral wall portion 18b. However, the guide tube 18, shown in FIG. 1, is constituted by connecting a tubular portion having a channel-shape in section of a left half portion formed of a magnetic material such as iron and a tubular portion having an inverted L shape in section of a right half portion formed of a non-magnetic material such as aluminum using a number of bolts 14.

The outer peripheral wall portion 18a of the guide tube 18 opposed to the inner peripheral surface of the brake drum 13 is provided with a number of openings at the same peripheral intervals, and a ferromagnetic plate (pole piece) 21 is fitted in and secured to each opening. Actually, the ferromagnetic plate 21 is cast within the outer peripheral wall portion 18a when the outer peripheral wall portion 18a is casted of aluminum.

A plurality of actuators (not shown) are supported at the same peripheral intervals on the frame plate 31 having reinforcing rib 31a. Each actuator has a piston fitted in a cylinder to define a pair of fluid pressure chambers, and a magnet support tube 19 is connected to an end of a rod 17 projecting into the inner space of the guide tube 18 from the piston. The magnet support tube 19 is axially movably supported in the inner space of the guide tube 18. Permanent magnets 20 opposed to the ferromagnetic plates 21 are connected to the outer peripheral wall of the magnet support tube 19 so that their polarities are different alternately in a peripheral direction.

When in braking, the magnet support tube 19 is projected into the brake drum 13 by the rod 17 of the actuator as shown in FIG. 1. When the rotating brake drum 13 crosses the magnetic field exercising from the magnets 20 to the inner peripheral surface of the brake drum 13 via the ferromagnetic plates 21, eddy currents are generated in the brake drum 13 so that the brake drum 13 generates a braking torque. The brake drum 13 is generated in heat by the eddy current and cooled by the environment air directly or through a cooling fin 13a. At this time, as shown in FIG. 2, magnetic circuits 40 are formed between the magnet support tube 19 and the brake drum 13. When not in braking, the magnet support tube 19 is moved to left in FIG. 1 by the actuator or withdrawn from the brake drum 13, the magnets 20 will not exercise the magnetic field to the brake drum 13 and the brake drum 13 will not generate the braking torque. As described above, since the magnet type eddy current reduction apparatus generates the braking force on the basis of the eddy current generated by the relative rotation between the magnets 20 and the baking drum 13, the larger the eddy current and the magnetic field, the larger the braking torque.

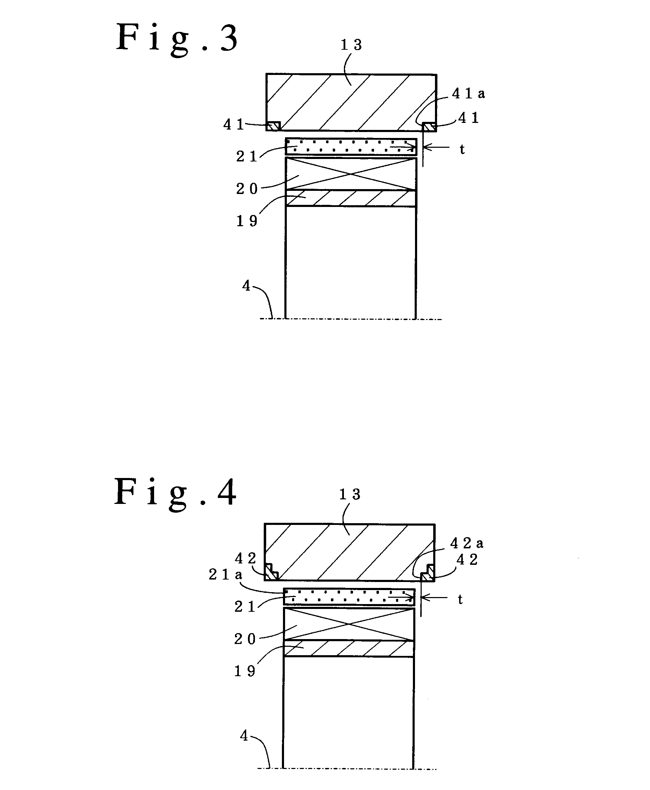

According to the present invention, as shown in FIG. 3, in order to increase the braking torque of the brake drum 13, an annular body 41 formed of a good conductor such as copper is provided on the brake drum 13 formed of a material having a high permeability such as steel while being positioned externally of at least one side edge of the outer surface of the ferromagnetic plate 21 to suppress the heat deterioration of the annular body 41, to increase the eddy current and to increase the torque. For facilitating a flow of the eddy current between the brake drum 13 and the annular body 41, the inner end surface 41a of the annular body 41 is placed in close contact with the brake drum 13 in the vicinity of the inner peripheral surface of the brake drum 13. For increasing the close contact strength, the annular body 41 is deposited, copper-plated or copper-welded to the entire surface of the inner end surface 41a which is a joining portion of the brake drum 13, or deposited, copper-plated or copper-welded to only the inner peripheral portion and the outer peripheral portion of the inner end surface 41a.

According to the present invention, as shown in FIG. 3, in order to increase the braking torque of the brake drum 13, a pair of annular bodies 41 formed of a good conductor such as copper are mounted on the brake drum 13 formed of a material having a high permeability such as steel. Each annular body is positioned externally of at least one side edge of the outer surface of the ferromagnetic plate 21 to suppress the heat deterioration of the annular body 41, to increase the eddy current and to increase the torque. For facilitating flow of the eddy currents between the brake drum 13 and the annular bodies 41, the inner end surface 41a of each annular body 41 is placed in close contact with the brake drum 13 in the vicinity of the inner peripheral surface of the brake drum 13. For increasing the close contact strength, the annular body 41 is deposited, copper-plated or copper-welded at the entire surface to the inner end surface 41a which is a joining portion to the brake drum 13, or deposited, copper-plated or copper-welded to only the inner and the outer peripheral portions of the inner end surface 41a.

In the embodiment shown in FIG. 4, an annular body 42 made of copper having an L-shape in section is connected to the opposite end portions of the inner peripheral surface of the brake drum 13 to make large the dimension of a diametral direction of the annular body 42. Also in this case, the inner end surface 42a of the annular body 42 is deposited, plated or welded to the brake drum 43. A clearance (axial dimension) "t" is provided between the inner end surface 42a of the annular bodies 42 and the opposite side edges 21a of the ferromagnetic plates 21 so that the annular bodies 42 are not superposed to the outer peripheral portion of the ferromagnetic plates 21.

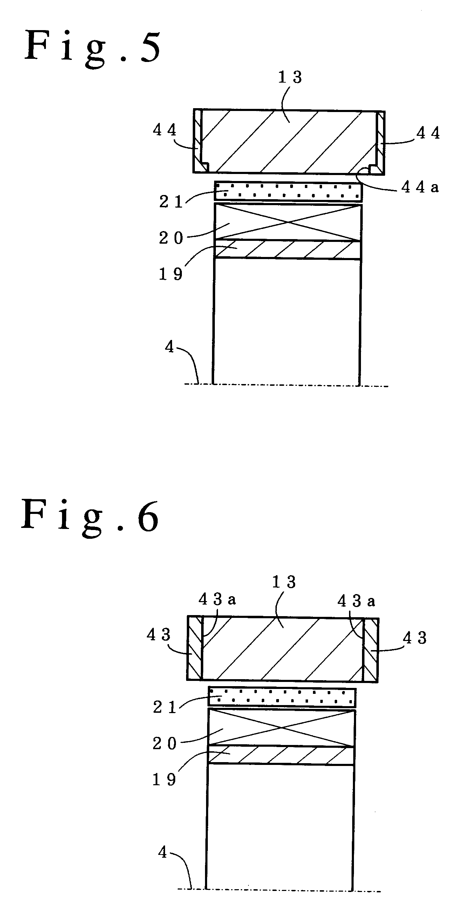

In the embodiment shown in FIG. 5, a pair of annular bodies 44 made of copper having an L-shape in section is superposed on and connected to the opposite end surfaces of the brake drum 13 so that the annular body 44 covers the entire end surface of the brake drum 13. An inner end surface 44a on the inner peripheral portion of the annular body 44 is deposited, plated or welded, and also the outer peripheral portion of the annular body 44 is deposited, plated or welded.

In the embodiment shown in FIG. 6, a pair of plate-like annular bodies 43 having a uniform thickness is superposed on and connected to the opposite end surfaces of the brake drum 13, and the inner end surface 43a of the annular body 43 is deposited, plated or welded to the opposite end surfaces of the brake drum 13 over the entire surface, or deposited, plated or welded only with the inner and the outer peripheral portions.

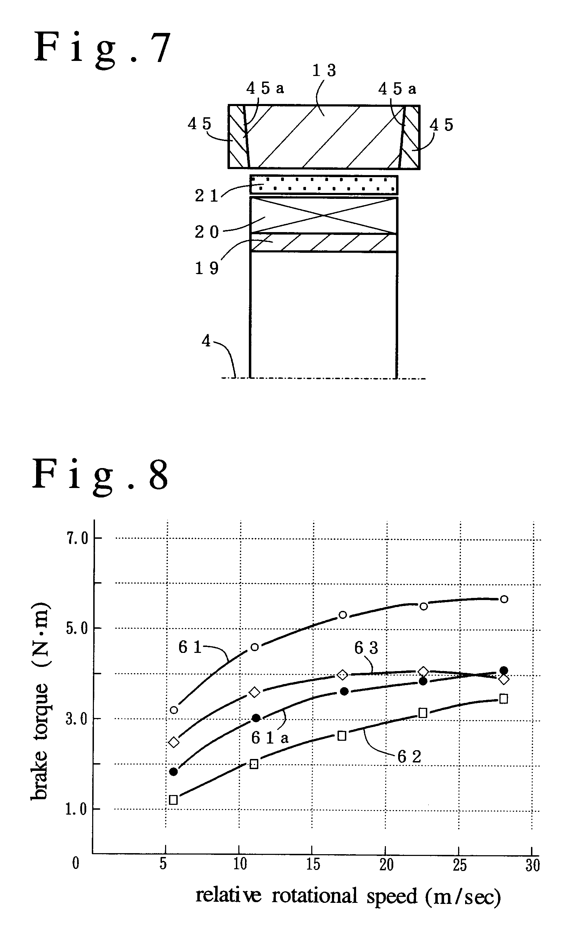

In the embodiment shown in FIG. 7, a pair of annular bodies 45 which are not uniform in thickness, largest in thickness in the inner peripheral portion and gradually thinner toward the outer peripheral portion are superposed on and connected to the opposite end surfaces of the brake drum 13, respectively. The outer peripheral portion which is low in temperature can be made thin to reduce a cost of the products.

FIG. 8 is a diagram, in which line 61 shows the characteristics of the braking torque generated in the brake drum 13 to the number of revolutions (peripheral speed) of the brake drum 13 shown in FIG. 6, line 61a shows the characteristics of the braking torque generated in the brake drum to the number of revolutions of the brake drum in which the annular body 43 is connected to only one end surface of the brake drum 13 shown in FIG. 6, line 62 shows the characteristics of the braking torque generated in the brake drum 13 to the number of revolutions of the conventional brake drum 13 having no annular body 43 shown in FIG. 9, and line 63 shows the characteristics of the braking torque generated in the brake drum 13 to the number of revolutions of the brake drum 13 shown in FIG. 10.

As will be apparent from FIG. 8, in the arrangement wherein a copper layer is provided on the entire surface of the inner peripheral surface of the brake drum (See FIG. 9, and the same is true for the arrangement wherein electric conductive rods are provided on the inner peripheral surface of the brake drum shown in FIG. 10.), the braking torque ceases to increase (saturated) in a high speed rotational area, but in the present invention, such tendency shifts to a higher speed rotational area, and the braking torque is enhanced even in a higher temperature area. This enhancement of the braking torque is said to result from reasons such that the annular body (41 - 45) is mounted externally (a portion away in an axial direction of the brake drum) of the side edge 21a of the ferromagnetic plate 21, to thereby enhance the radiating property as compared with prior art; that since the ferromagnetic plate 21 constitutes a continuous body superposed on the steel brake drum 13 in terms of width or axial dimension, the annular body restrains the magnetic flux passed through the ferromagnetic plate 21 from spreading or leaking outside the opposite ends of the brake drum 13 whereby suppressing the lowering of the amount of magnetic flux; and that since the annular body (41 - 45) formed of a good conductor is disposed on the opposite ends of the brake drum 13, a path of eddy current (turning point of eddy current), in the axial direction of the brake drum 13, extends to the opposite ends of the brake drum 13.

The connecting portion relative to the annular body in the vicinity of the inner peripheral surface of the brake drum is deposited (deposition of the steel and copper materials), plated or welded into close contact, whereby a current smoothly flows from the steel brake drum to the copper annular body to facilitate a flow of eddy current and enhance the braking torque.

While in the aforementioned embodiment, a description has been made of the case of the permanent magnet type eddy current reduction apparatus in which the magnet support tube is axially reciprocated relative to the brake drum to switch a position between the braking position at which the magnet is opposed to the ferromagnetic plate and the non-braking position at which the magnet is not opposed to the ferromagnetic plate, it is to be noted that the present invention is not limited thereto but the present invention can be also applied to a permanent magnet type eddy current reduction apparatus in which a single magnet support tube is rotated with respect to a brake drum to switch a position between a braking position at which two magnets of the same polarity are opposed to a common ferromagnetic plate and a non-braking position at which two magnets of different polarities are opposed to a common ferromagnetic plate (see Japanese Patent Application Laid-Open No. Hei 4-88867 Publication), and a permanent magnet type eddy current reduction apparatus in which an immovable magnet support tube and a movable magnet support tube are disposed within a brake drum, and the movable magnet support tube is rotated to switch a position between a braking position at which magnets of the same polarity of the opposite magnet support tubes are totally opposed to a common ferromagnetic plate and a non-braking position at which a pair of magnets of different polarities are of both magnet support tubes are totally opposed to a common ferromagnetic plate (see Japanese Patent Application Laid-Open No. Hei 4-12659 Publication).

Further, the present invention can be applied not only to the brake drum of a permanent magnet type eddy current reduction apparatus but also to an electromagnet eddy current reduction apparatus as disclosed in Japanese Patent Application Laid-Open No. 63-274359 Publication.

The present invention is not limited to a permanent magnet type eddy current reduction apparatus of a brake drum type but can be applied to a permanent magnet type eddy current reduction apparatus of a brake disk type, and electromagnets can be used in place of permanent magnets.

Obviously, many modifications and variations of the present invention are possible in right of the above teachings. It is to be understood, therefore, that the invention can be practiced otherwise than as specifically described.

As described above, the present invention provides an eddy current reduction apparatus for generating a braking force in a rotational body of an eddy current using magnets, the apparatus comprising a steel brake drum secured to a rotational shaft, a plurality of magnets opposed to the inner peripheral surface of said brake drum through ferromagnetic plates, and an annular body formed of a good conductor such as copper secured to at least of one end of said brake drum not opposed to the ferromagnetic plate in the inner peripheral surface of said brake drum. Therefore, the annular body is mounted externally (a portion away in an axial direction of the brake drum) of the side edge of the ferromagnetic plate to thereby enhance the radiating property and suppress the thermal deterioration. Further, since the ferromagnetic plates constitute the continuous body with the steel brake drum, the lowering of the amount of magnetic flux is suppressed, and the braking torque is enhanced.

The annular body in the vicinity of the inner peripheral surface of the brake drum is deposited (deposition of the steel and copper materials), plated or welded into close contact, whereby eddy currents smoothly flow from the steel brake drum to the copper annular body to enhance the braking torque.

Since the steel annular body is good in thermal conductivity, the brake drum is placed in close contact with the annular body to thereby enhance the radiating property of the inner peripheral portion of the brake drum.

Since the central portion of the brake drum exposed to the high temperature is made of steel, and the temperature of the annular body having a large coefficient of thermal expansion is lower than that of the brake drum having a small coefficient of thermal expansion, they are less affected by the difference of the coefficient of thermal expansion to overcome the problem such as separation or crack of the connecting portion between the brake drum and the annular body.

Since electric conductive rods are not provided on the inner peripheral surface of the brake drum, noises can be completely removed.
- t:: crearance
- 2:: gear box
- 2a::
- 3:: bearing
- 4:: rotational shaft
- 5:: mounting flange
- 5a:: spline
- 6:: nut
- 7:: brake drum
- 9:: boss portion
- 9a:: flange portion
- 9b:: aparture
- 10:: bolt
- 10a:: nut
- 12:: spoke
- 13:: brake drum
- 13a:: cooling fin
- 14:: bolt
- 17:: rod
- 18:: guide tube
- 18a:: outer peripheral wall
- 18b:: inner peripheral wall
- 19:: magnet support tube
- 20:: permanent magnet
- 21:: ferromagnetic plate
- 40:: magnetic circuit
- 41:: annular body
- 41a:: inner end surface
- 42:: annular body
- 42a:: inner end
- 43:: annular body
- 43a:: inner end
- 44:: annular body
- 44a:: inner end
- 45:: annular body
- 45a:: inner end.
- 46:: tube
- 47:: annular body
- 48::
- 61:: line
- 61a:: line
- 62:: line
- 63:: line

## Claims

1. An eddy current reduction apparatus for generating a braking force in a rotational body of an eddy current using magnets, the apparatus comprising a steel brake drum secured to a rotational shaft, a plurality of magnets opposed to the inner peripheral surface of said brake drum through ferromagnetic plates, and an annular body formed of a good conductor such as copper secured to at least of one end of said brake drum not opposed to the ferromagnetic plate in the inner peripheral surface of said brake drum.

2. The eddy current reduction apparatus according to claim 1, wherein said annular body formed of the good conductor is secured to said brake drum in the vicinity of the inner peripheral surface of said brake drum by deposition, plating or welding.

3. The eddy current reduction apparatus according to claim 1, wherein thickness of said annular body formed of the good conductor is gradually thinner from the inner peripheral side of said brake drum toward the outer peripheral side thereof.
